# EUROPEAN PATENT SPECIFICATION

(11) **EP 1 918 251 B1**
(45) Date of publication and mention of the grant of the patent: **15.12.2010**
(21) Application number: 06022673.5
(22) Date of filing: 31.10.2006
(51) Int. Cl.: C02F 1/00, B01D 24/38

(54) **A water distributor for a multiport valve, a multiport valve including said distributor and a filter including said valve**
Wasserverteiler für ein Mehrwegeventil, Mehrwegeventil mit entsprechendem Verteiler und Filtervorrichtung mit besagtem Ventil
Distributeur d'eau pour une soupape à voies multiples, soupape à voies multiples avec ledit distributeur et dispositif de filtration avec ladite soupape

(43) Date of publication of application: 07.05.2008
(73) Proprietor: Pentair International Sarl, 1004 Lausanne (CH)
(72) Inventor: Verna, Manu, New Delhi - 110091 (IN); Spurgin, Michael, 13120 Gardanne (FR); Kalmès, Philippe, 3500 Hasselt (BE)
(74) Representative: BOVARD AG

(56) References cited:
- DE-B- 1 063 988
- US-A- 3 625 365
- US-A- 3 747 768
- US-A- 3 809 247

## Description

### Technical Field

The invention relates to improvements in multiport valves. More specifically, the present invention relates to improvements in water distributors for multiport valves for direct mounting on a filter tank, such as a sand filter tank in a swimming pool filtering system.

The invention also concerns a filter with a multiport valve.

### Background Art

In the field of water filtration, and specifically though not exclusively in the field of water filtration for swimming pool facilities use is made of so-called sand filters or more generally filters including a bed of a regenerable filtering medium. Usually, these filters include an external tank containing a mass of regenerable filtering medium forming a filtration bed. In some cases the filtering medium is sand, such as siliceous sand, and the filter is called a sand filter. A multiport valve is mounted on top of the tank and includes a water distributor provided with water outlet ports to feed water into the tank and a water recovery piping system to collect water from the filtering medium. The recovery piping system usually includes a centrally arranged standpipe extending from a water collector, arranged near the bottom of the filter tank, to the multiport top mount valve. The water flow can be reversed during backwash, such that water enters the central standpipe, flows through the bottom collector into the filtration bed and washes the filtration medium by flowing from the bottom toward the top of the filter bed from where it is then collected through the water ports in the water distributor arranged on the bottom of the multiport valve.

Multiport valves of this kind are designed to perform a plurality of functions. The basic function of the valve is to direct water from the swimming pool through the filter and to re-direct the filtered water towards the swimming pool again. The same valve can be designed to perform other functions, such as backwash of the filter medium, to wash the filter medium after backwash, to drain the pool, to circulate the water by-passing the filter.

In order to perform these functions a valve rotor is usually provided inside a valve body. The valve rotor is provided with a gasket and is resiliently biased in an operating position by a spring. The valve rotor is connected to a selector for selectively positioning said valve rotor in the desired angular position corresponding to the required valve operating mode. In a preferred embodiment said selector includes a lever and a shaft. The shaft is rigidly connected to the valve rotor and the lever is hinged to the shaft. By acting on the lever the valve rotor can be rotated stepwise in order to set the valve rotor in one of the various positions, corresponding to an operating mode of the valve. A multiport valve of this kind is disclosed in US-A-6,173,743.

Further multiport valves of this kind and relevant filters are disclosed in US-A-3,513,981; US-A-6,186,174; US-A-4,105,555: US-A-3,640,310; US-A-3,911,956; US-A-3,809,247; US-A-3,828,932; US-A-7,081,200; US-A-5,762,785; US-A-3,625,365; US-A-6,287,462; US-A-3,747,768,

One critical aspect of multiport valves and filters adopting such valves is efficient distribution of the water on the filtration bed. Indeed in prior art multiport valves (see in particular US-A-3,747,768; US-A-3,625,365; US-A-3,809,247) the distributor which is arranged above the filter bed is provided with water apertures for distributing the water on the underlying filter bed. The apertures are oriented downwardly towards the filter bed and water exiting the apertures is distributed only in the central area of the filter bed. The filter bed is not properly exploited,

### Objects and Summary of the Invention

According to an embodiment, an object of the invention is to provide a multiport valve which achieves an improved water distribution in the filter.

This result is obtained with a device according to claim 1.

In a preferred embodiment of the invention a multiport valve includes: a main body; a valve rotor inside said main body; a selector for selectively positioning the valve rotor in one of a plurality of desired operating positions; a hollow space inside said main body, which can be brought in fluid connection with a water inlet port by means of said valve rotor; and a water distributor, through which water flows out of the valve or in the valve, said water distributor being provided with water outlet ports. The water distributor includes water deflecting means, which are positioned such as to radially outwardly deflect the water flowing out of said valve through said distributor.

The water deflecting means are formed by water deflecting surfaces.

The water distributor includes water deflecting surfaces, which impart to the water exiting the distributor a speed component in a substantially radially oriented direction.

The distributor has an externally convex wall, such as a hemispherical or frustum-shaped wall, on which water ports are provided, water-deflecting elements being arranged on the external surface of said convex wall.

In a preferred embodiment, the water deflecting elements include annular ridges extending around an axis of said distributor.

According to a different aspect, the invention also concerns a water filter including: a tank; a filtering bed in said tank; and a multiport valve for feeding water into said tank and out of said tank of the type described above.

Further advantageous features and embodiments of the invention are disclosed herein after and in the appended claims.

### Brief Description of the Drawings

For a better understanding of the invention, reference is made to the following detailed description of a non-limiting exemplary embodiment of the invention, considered in conjunction with the accompanying drawings, in which:
Fig.1 is a schematic cross-section of a sand filter with a multiport valve according to the invention;
Fig.2 is a side view of the valve in Fig.1;
Fig.3 is a sectional view of the valve;
Fig.4 is a bottom view of the water distributor;
Fig.5 is top view of the water distributor;
Fig.6 is a cross sectional view of the water distributor;
Fig.7 is a side external view of the water distributor; and

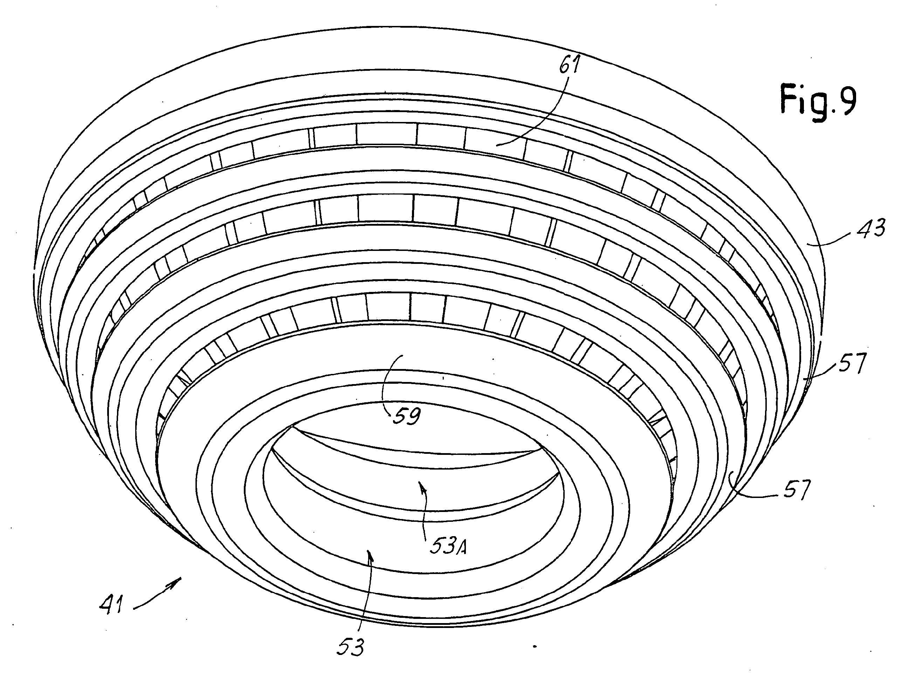

Figs. 8 and 9 are perspective views of the water distributor.

### Detailed Description of an Embodiment of the Invention

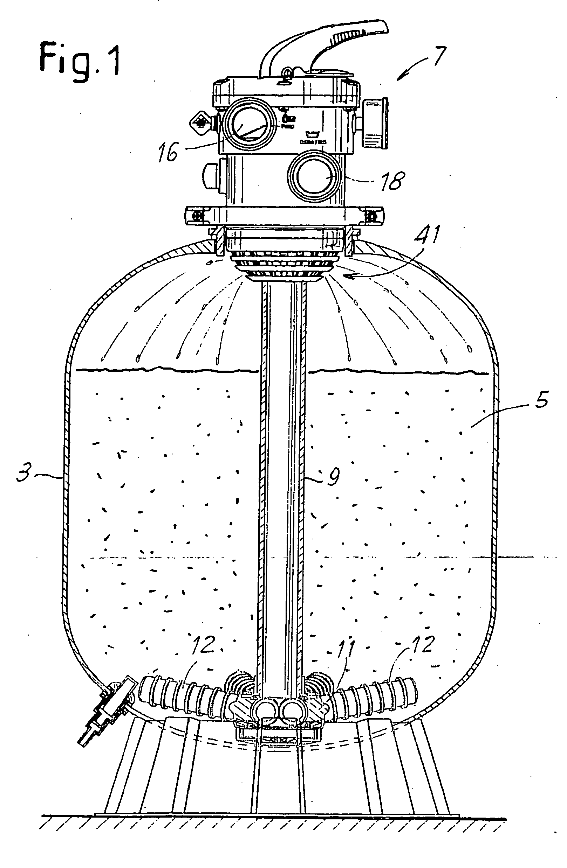

Fig.1 shows a schematic cross-section of a filter tank equipped with a multiport valve. Herein after reference will be made to a sand filter. However, the multiport valve according to the invention can be used in combination with other kinds of filters, which use e.g. ion-exchange resins or other regenerable filtering media instead of or in addition to sand. Generally speaking, the valve according to the invention can be used in conjunction with any filter where water or other liquids are distributed over a filtering bed made of bulk material, through which the liquid percolates.

The filter is designated 1 as a whole and includes a filter tank 3 containing a filtration bed 5, e.g. made of siliceous sand or other bulk material housed in the filter tank 3. The tank 3 has an upper opening, on which a multiport valve 7 is connected. Water pipes (not shown) are connected to the various ports of multiport valve 7 according to know criteria and according to a configuration, which can differ based on the structure and operating modes of the valve.

According to a preferred embodiment, a standpipe 9 extends from the bottom of the tank 3 towards the valve 7. In a preferred embodiment, a water collector or manifold 11 is connected on the bottom end of the standpipe 9. The manifold is provided with radially extending pipes 12, also called "laterals", into which the water percolating through the filter bed 5 enters and from which it enters the standpipe 9 and then fed inside the valve 7 when the valve operates in the filtering mode. Water flow can be reversed e.g. during backwash operation. In this case water is fed via the standpipe 9 into the sand filter bed 5 and is collected by a water distributor surrounding the sanding pipe 9, to be described later on.

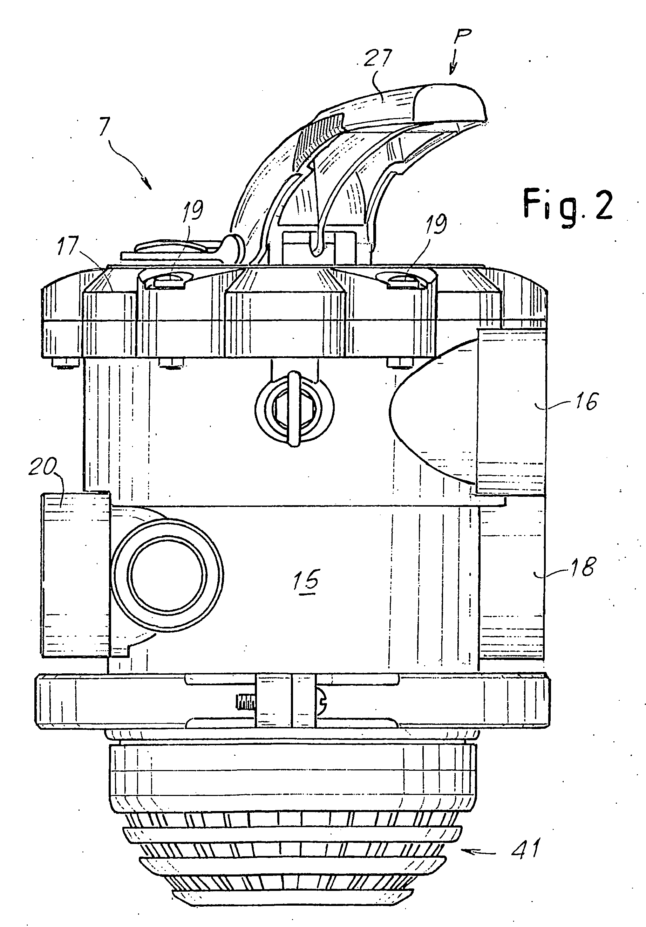

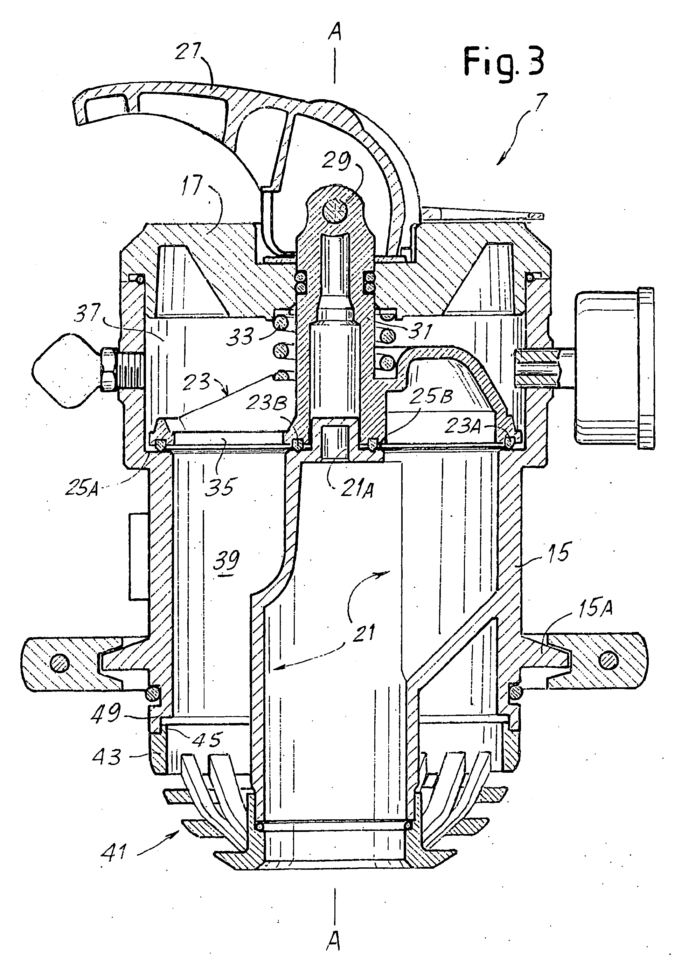

The structure of the multiport valve 7 is best shown in Figs. 2 and 3. In a preferred embodiment the valve 7 includes a main body 15, preferably made of injection-molded plastic material and provided with a lid 17 secured to the main body 15 by screws 19 or other suitable fastening means. In a possible embodiment the main body 15 has a flange 15A formed on its outer surface, for connection to the tank 3. A plurality of ports are provided on the main body. In the example shown in the drawings, the valve includes: a water inlet port 16, which can be connected to the delivery side of a water pump (not shown); a water outlet port 18, from which the filtered water is returned to the swimming pool or other facility; a waste port from which water used for backwashing or rinsing of the filter is directed to a waste collecting pipe or the like.

In a preferred embodiment, the main body includes a central core 21, arranged approximately in an axially central position inside the main body 15 and provided with a central appendage 21A on which a valve rotor 23 is centered and guided. The valve rotor is provided with a so-called spider gasket, having two annular gasket portions 23A and 23B, co-acting with a corresponding seat having to annular seat portions 25A, 25B provided on the outer wall of the main body 15 and around the appendage 21A of the central core 21, respectively. The shape and function of the valve rotor 23 is known to those skilled in the art and does not require a detailed description. The operating mode of the valve is selected by angularly moving the valve rotor 23 in the desired angular position.

The rotation of the valve rotor 23 is controlled by a selector. In a preferred embodiment such selector is hand-operated, even though a servomechanism for acting on the valve rotor is not excluded. In a preferred embodiment selector includes a lever 27 hinged at 29 to a shaft 31, which is torsionally connected to the valve rotor. According to a preferred embodiment, the shaft 31 is integral with the valve rotor 23, and most preferably molded as one piece with the valve rotor 23. In a different embodiment, the shaft 31 could be made of a separate mechanical member, connected in any suitable way to the rotor. A helical compression spring 33 is arranged around the shaft 31. The compression spring 33 pushes the valve rotor 23 against the seats 25A, 25B of the main body 15, such that the annular gaskets 23A, 23B sealingly isolate the various internal parts of the valve to establish communication between the selected ports of the valve in a manner known per se.

In order to angularly move the valve rotor from one angular position to another, the lever 27 is pressed according to arrow P (Fig.2) to lift the valve rotor 23 and the annular gaskets 23A, 23B thereof from their seats. Maintaining the lever 27 in the pressed position and thus the valve rotor 23 in the lifted position, the lever is rotated around the axis A-A of the valve solidly with the valve rotor 23 to the desired angular position.

In one of the selectable angular positions of the valve rotor 23 an aperture 35 provided in the valve rotor 23 can be brought in a position such that a first inner hollow space 37 arranged above the valve rotor 23 is placed in fluid communication with a second inner hollow space 39 of the valve, positioned underneath the valve rotor 23. The hollow space 37 is in fluid communication with one of the inlet ports of the valve. The hollow space 39 at least partly surrounds the central core 21 and is closed at the bottom by a water distributor 41. According to a preferred embodiment the hollow water distributor 41 is made of injection-molded plastic material. Its shape will be described in detail later on.

When the multiport valve 7 is set in the filtration mode, water from e.g. a swimming pool is delivered to the upper hollow space 37 of valve 7 and flows through aperture 35 in the lower hollow space 39. From there the water is distributed by water distributor 41 on the top surface of the filtration bed 5, passing through water distribution ports or apertures provided in the distributor 41. The water fed into the filter tank 3 percolates through the filtration bed 5 and is collected from the collector 11.

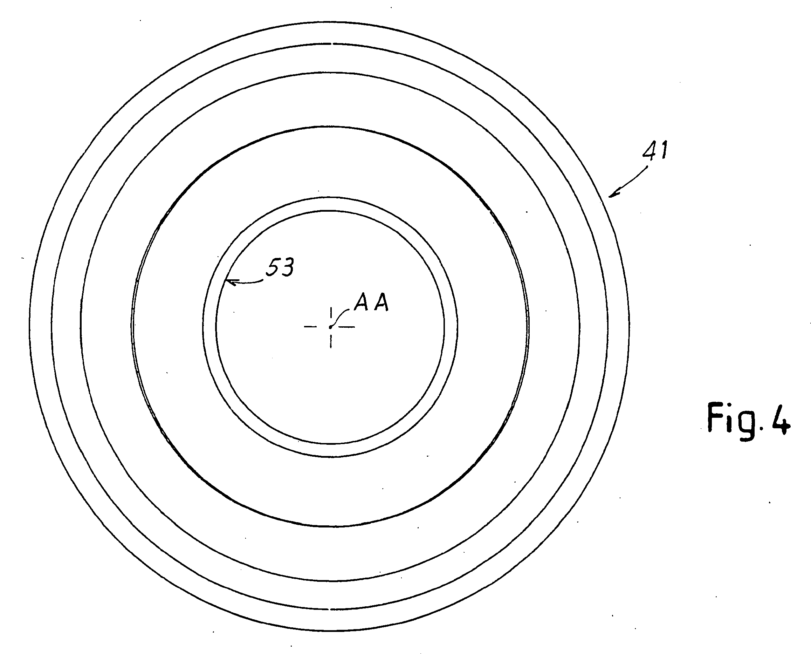

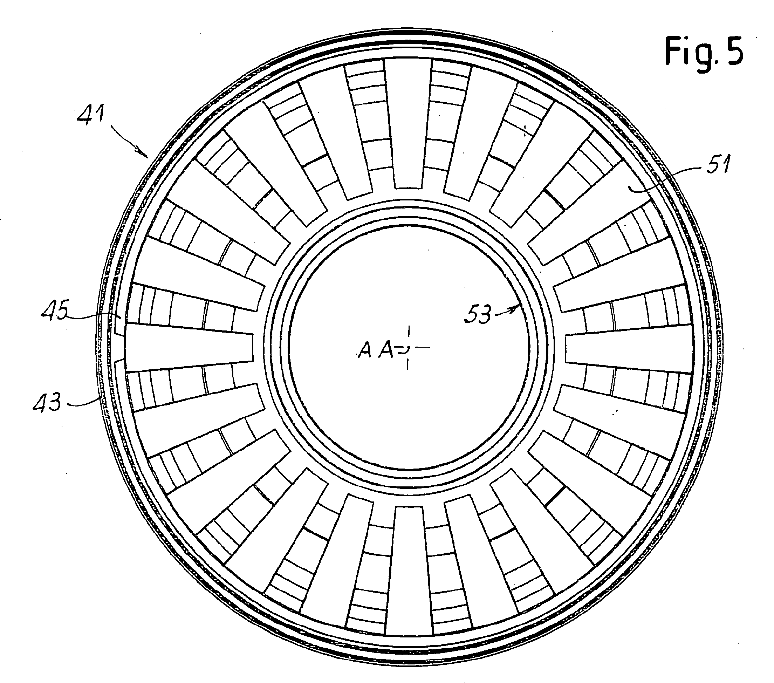

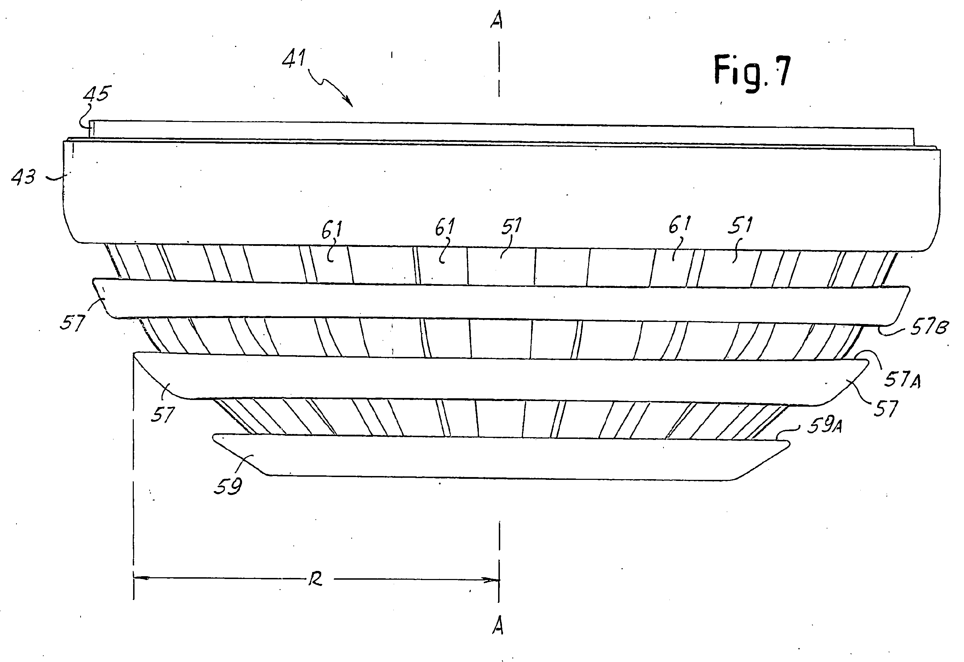

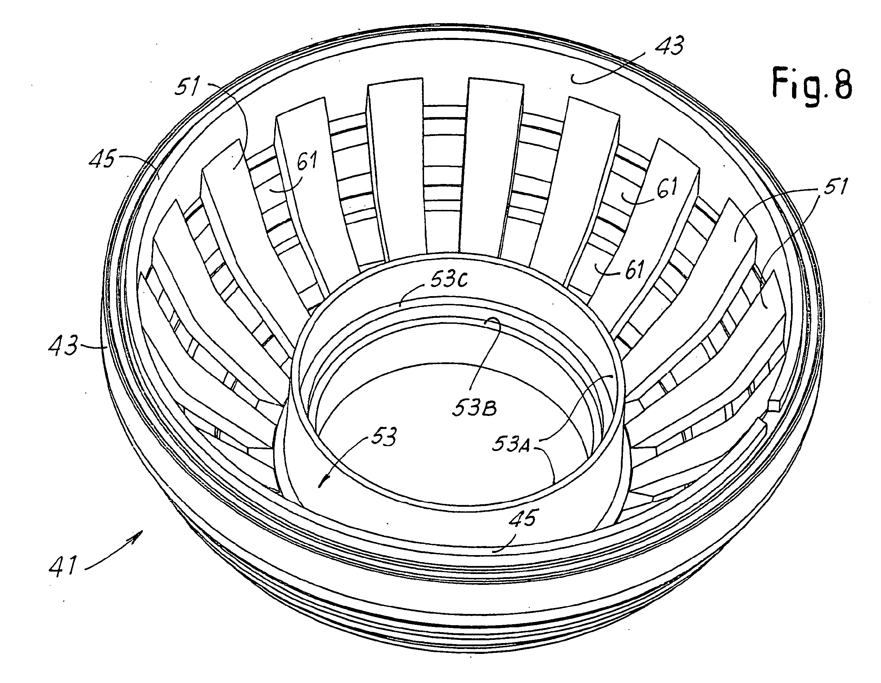

As best shown in Figs. 4 to 8, in a preferred embodiment the water distributor 41 has a substantially dome-shaped configuration with a base portion 43 and an annular shoulder 45 for coupling to a corresponding annular ridge 49 provided on the bottom part of the main body 15 of valve 7. In a possible embodiment the base portion 43 has a substantially cylindrical outer shape, though a frusto-conical, frusto-pyramidal or prismatic shape could also be possible. A set of curved ribs 51 integral with the base portion 43 depart therefrom and extend towards a bottom sleeve portion 53, the outer diameter of which is smaller than the inner diameter of the base portion 43, such that said ribs take up an approximately hemispherical shape. The ribs 51 thus form an outwardly convex wall facing the interior of the filter tank 3.

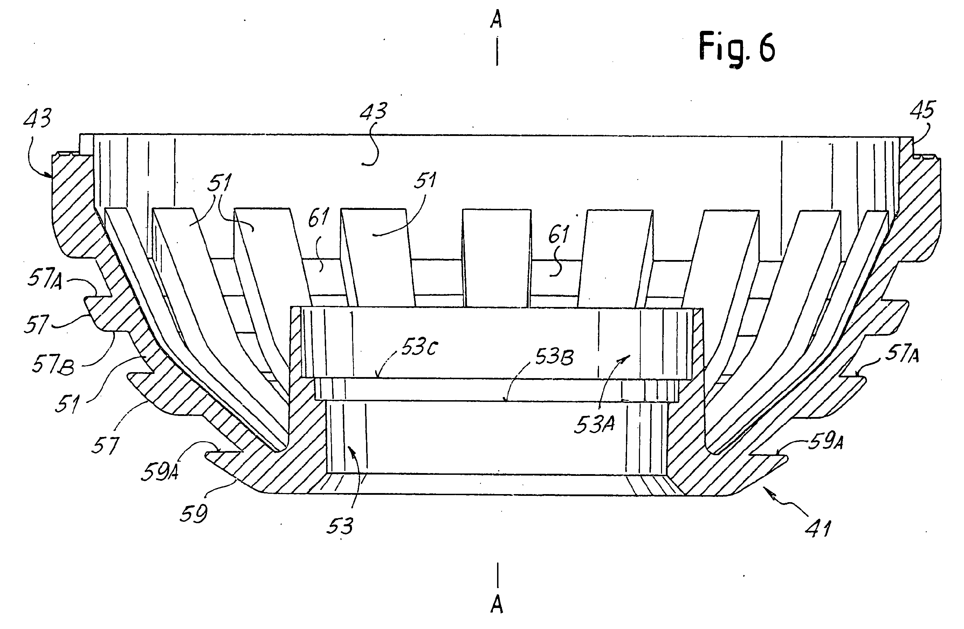

The sleeve portion or collar 53 has an inwardly-protruding connecting portion 53A with a stepwise shaped cross-section as best shown in Fig.6. The stepped cross-section of said inwardly-protruding connecting portion forms a first annular shoulder 53B for an O-ring or similar gasket 55 (Fig.3) and a second annular shoulder 53C for retention of the bottom part of the central core 21 of the valve main body 15, as best seen in Fig.3.

In a preferred embodiment, the distributor is provided with annular ridges 57, 59 arranged on the outer surface of ribs 51. In the example shown three such annular ridges are provided, the last of which is integral with the sleeve 53. A different number of said annular ridges is also possible, depending e.g. on the axial dimension of the distributor, on the dimension of the ribs 51, on the flow rate for which the valve is designed.

According to a preferred embodiment, each annular ridge 57, 59 has a top annular surface 57A, 59A extending on a plane which is substantially orthogonal to the axis A-A of the water distributor 41. Additional, in a possible embodiment a bottom annular surface 57B defines the lower surface of each annular ridge and extends on a plane substantially orthogonal to the axis A-A of the distributor 41. The external surface of each annular ridge 57, 59 is preferably conical or spherical in shape, i.e. each such ridge is externally bound by a sector of a conical or spherical surface.

The annular ridges 57, 59 and the curved ribs 51 form a sort of grid-shaped or basket-shaped wall with ports or apertures 61 through which the water can flow from the inner hollow space 39 into the filter tank 3 to reach the filter bed 5.

The annular surfaces 57A, 59A of the annular ridges 57 form water deflectors, which radially deflect the water flow exiting the ports 61 by imparting to the water flow a speed component in the radial direction, i.e. toward the side walls of the tank 3. The resulting water flow exiting the water distributor 41 is thus spread on a wider surface of the filter bed 5, thanks to the radial speed component of the water flow imparted by the deflecting surfaces 57A, 59A. The filter medium of the filter bed 5 is thus more uniformly exploited and water percolates in a more uniform way through the overall cross section of the filter bed 5.

As can be appreciated from the bottom view of the distributor 41 shown in Fig.4, the radial dimension of each annular ridge 57, 59 is such as to cover the corresponding ports 61. Each annular ridge 57, 59 projects radially at least as far as the ports 61 arranged immediately above said ridge, such that in a plan bottom view the ports 61 are covered by the annular ridges 57, 59. Therefore, the water cannot flow from the water ports 61 directly towards the filter bed 5, but rather the water exiting any one of the ports 61 impinges against the corresponding deflecting surface 57A or 59A and is deviated radially.

The shape of the water distributor 41, formed by the reciprocally crossing annular ridges 57, 59 and ribs 51 is particularly advantageous because it can be efficiently obtained by injection molding. The structure thus obtained requires a limited amount of plastic, has a high mechanical resistance and maximizes the radial deflecting effect on the water flow.

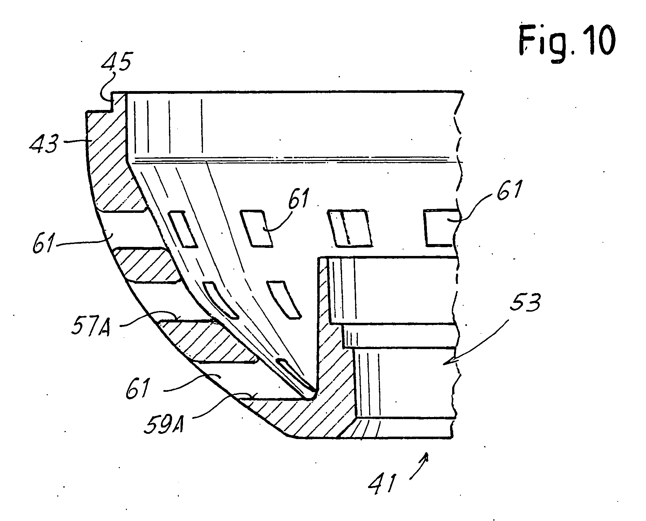

Different shapes of the distributor are not excluded, however. The distributor could have a substantially hemispherical or frustum-shaped wall provided with ports directly formed in said wall and extending in a mainly radial direction. The ports can be defined by substantially radially oriented planar or curved surfaces. Fig. 10 shows an embodiment in which the ports 61 are in the form of holes having a square cross-section and passing through the thickness of the dome-shaped wall of the distributor 41. Reference number 57A, 59A designate a surface of the apertures or ports 61, which is radially oriented. In this case the surfaces 57A, 59A are planar and arranged on planes substantially orthogonal to the axis A-A of the water distributor 41. In a different embodiment the ports 61 can have a circular or elliptical cross section, wherein the axis of the port is, however, again substantially radially oriented to direct the water flow in a radial centrifugal direction towards the side wall of tank 3.

## Claims

1. A multiport valve including: a main body (15); a valve rotor (23) inside said main body; a selector for selectively positioning the valve rotor in one of a plurality of desired operating positions; a hollow space (39) inside said main body, which can be brought in fluid connection with a water inlet port by means of said valve rotor; and a water distributor (41) through which water flows out of the valve or in the valve; wherein said distributor includes an externally convex wall on which water ports (61) are provided, **characterized in that** said water distributor includes water-deflecting elements (57, 59) arranged on the external surface of said convex wall, said water-deflecting elements including water-deflecting surfaces (57A, 59A), which are positioned such as to deflect the water flowing out of said distributor in a radially outwardly oriented direction.

2. Valve according to claim 1, **characterized in that** said distributor includes a plurality of substantially radially extending water ports (61), and that said water ports (61) have a square cross-section.

3. Valve according to claim 1, **characterized in that** said water deflecting elements include annular ridges extending around an axis (A-A) of said distributor (41).

4. Valve according to claim 1, 2 or 3, **characterized in that** said convex wall is formed by spaced apart ribs (51).

5. Valve according to claim 4, **characterized in that** said ribs (51) extend from a circular base (43) of the distributor (41) towards a central sleeve (53), said sleeve (53) having a smaller diameter than said base and being substantially coaxial to said base.

6. Valve according to claim 4 or 5, **characterized in that** said spaced apart ribs are arranged according to a substantially hemispherical surface.

7. Valve according to one or more of the preceding claims, **characterized in that** said water-deflecting elements include surfaces (57A, 59A) extending on planes, which are substantially orthogonal to the axis (A-A) of said distributor.

8. Valve according to claim 7, **characterized in that** said water-deflecting elements include annular ridges bound by opposed parallel surfaces (57A, 59A) extending on planes substantially orthogonal to the axis of said distributor.

9. A water filter including: a tank (3); a filtering bed (5) in said tank; and a multiport valve (7) for feeding water into said tank and out of said tank; **characterized in that** said multiport valve (7) is a valve according to one or more of the preceding claims.

## Patentansprüche

1. Mehrwegeventil, aufweisend: einen Hauptkörper (15); einen Ventildreher (23) in dem Hauptkörper; eine Auswahlvorrichtung zum gezielten Positionieren des Ventildrehers in einer von einer Vielzahl gewünschter Arbeitspositionen; einen Hohlraum (39) in dem Hauptkörper, der mittels des Ventildrehers über eine Flüssigkeit mit einer Wassereintrittsöffnung in Verbindung gebracht werden kann; und einen Wasserverteiler (41), durch den Wasser aus dem Ventil oder in das Ventil strömt; wobei der Verteiler eine nach außen konvexe Wand aufweist, an der Wasseröffnungen (61) vorgesehen sind, **dadurch gekennzeichnet, dass** der Wasserverteiler Wasserprallelemente (57, 59) aufweist, die an der Außenfläche der konvexen Wand angeordnet sind, wobei die Wasserprallelemente die Wasserprallflächen (57A, 59A) aufweisen, die derart positioniert sind, dass das Wasser, das aus dem Verteiler strömt, in eine radial nach außen gerichtete Richtung umgeleitet wird.

2. Ventil nach Anspruch 1, **dadurch gekennzeichnet, dass** der Verteiler eine Vielzahl von sich im Wesentlichen radial erstreckenden Wasseröffnungen (61) aufweist und dass die Wasseröffnungen (61) einen quadratischen Querschnitt aufweisen.

3. Ventil nach Anspruch 1, **dadurch gekennzeichnet, dass** die Wasserprallelemente (57, 59) ringförmige Stege aufweisen, die um die Achse (A-A) des Verteilers (41) verlaufen.

4. Ventil nach Anspruch 1, 2 oder 3, **dadurch gekennzeichnet, dass** die konvexe Wand durch voneinander beabstandete Rippen (51) geformt ist.

5. Ventil nach Anspruch 4, **dadurch gekennzeichnet, dass** die Rippen (51) von einer ringförmigen Basis (43) des Verteilers (41) aus in Richtung einer mittigen Hülle (53) verlaufen, wobei die Hülle (53) einen geringeren Durchmesser als die Basis aufweist und im Wesentlichen koaxial zu der Basis liegt.

6. Ventil nach Anspruch 4 oder 5, **dadurch gekennzeichnet, dass** die voneinander beabstandeten Rippen in einer im Wesentlichen hemisphärischen Fläche angeordnet sind.

7. Ventil nach einem oder mehreren der vorhergehenden Ansprüche, **dadurch gekennzeichnet, dass** die Wasserprallelemente Flächen (57A, 59A) aufweisen, die in Ebenen verlaufen, die im Wesentlichen orthogonal zur Achse (A-A) des Verteilers verlaufen.

8. Ventil nach Anspruch 7, **dadurch gekennzeichnet, dass** die Wasserprallelemente ringförmige Stege aufweisen, die von den gegenüberliegenden parallelen Flächen (57A, 59A) begrenzt werden, die in Ebenen verlaufen, die im Wesentlichen orthogonal zur Achse des Verteilers verlaufen.

9. Wasserfilter, aufweisend: einen Behälter (3); ein Filterbett (5) in dem Behälter und ein Mehrwegeventil (7) zum Einleiten von Wasser in den Behälter und zum Abführen von Wasser aus dem Behälter; **dadurch gekennzeichnet, dass** das Mehrwegeventil (7) ein Ventil nach einem oder mehreren der vorhergehenden Ansprüche ist.

## Revendications

1. Soupape à voies multibles multivoies incluant : un corps principal (15) ; un rotor de soupape (23) à l'intérieur dudit corps principal ; un sélecteur pour positionner sélectivement le rotor de soupape dans une d'une pluralité de positions de fonctionnement souhaitées ; une cavité (39) à l'intérieur dudit corps principal qui peut être amené en connexion fluidique avec un orifice d'entrée d'eau au moyen dudit rotor de soupape; et un distributeur d'eau (41) à travers lequel s'écoule de l'eau hors de la soupape ou dans la soupape ; dans lequel ledit distributeur inclut une paroi convexe extérieurement sur laquelle des orifices d'eau (61) sont prévus, **caractérisé en ce que** ledit distributeur d'eau inclut des éléments déviant l'eau (57, 59) agencés sur la surface externe de ladite paroi convexe, lesdits éléments déviant l'eau incluant des surfaces déviant l'eau (57A, 59A) qui sont positionnées de manière à dévier l'eau s'écoulant hors dudit distributeur dans une direction orientée radialement vers l'extérieur.

2. Soupape selon la revendication 1, **caractérisé en ce que** ledit distributeur inclut une pluralité d'orifices d'eau (61) s'étendant sensiblement radialement et que lesdits orifices d'eau (61) ont une section transversale carrée.

3. Soupape selon la revendication 1, **caractérisé en ce que** lesdits éléments déviant l'eau incluent des stries annulaires s'étendant autour d'un axe (A-A) dudit distributeur (41).

4. Soupape selon la revendication 1, 2 ou 3, **caractérisé en ce que** ladite paroi convexe est formée par des nervures espacées (51).

5. Soupape selon la revendication 4, **caractérisé en ce que** lesdites nervures (51) s'étendent depuis une base circulaire (43) du distributeur (41) vers un manchon central (53), ledit manchon (53) ayant un diamètre inférieur à ladite base et étant sensiblement coaxial à ladite base.

6. Soupape selon la revendication 4 ou 5, **caractérisé en ce que** lesdites nervures espacées sont agencées selon une surface sensiblement hémisphérique.

7. Soupape selon une ou plusieurs des revendications précédentes, **caractérisé en ce que** lesdits éléments déviant l'eau incluent des surfaces (57A, 59A) s'étendant sur des plans qui sont sensiblement orthogonaux à l'axe (A-A) dudit distributeur.

8. Soupape selon la revendication 7, **caractérisé en ce que** lesdits éléments déviant l'eau incluent des stries annulaires liées par des surfaces parallèles opposées (57A, 59A) s'étendant sur des plans sensiblement orthogonaux à l'axe dudit distributeur.

9. Filtre à eau incluant : un réservoir (3) ; un lit de filtration (5) dans ledit réservoir ; et une soupape à voies multiples (7) pour alimenter de l'eau dans ledit réservoir et hors dudit réservoir ; **caractérisé en ce que** ladite soupage à voies multiples (7) est une soupape selon une ou plusieurs des revendications précédentes.
